# DEMANDE DE BREVET EUROPEEN

(11) **EP 0 869 310 A1**
(43) Date de publication de la demande: **07.10.1998**
(21) Numéro de dépôt: 98400748.4
(22) Date de dépôt: 31.03.1998
(51) Int. Cl.: F17C 13/02, F17C 13/04, F16K 31/60, F16K 37/00, F16K 1/30

(54) **Robinet à manomètre pour bouteille de gaz comprimé**

(30) Priorité: 01.04.1997 FR 9703951
(71) Demandeur: GCE Charledave, 58404 La Charité sur Loire (FR)
(72) Inventeur: Rousselin, Guy, 18140 Herry (FR)
(74) Mandataire: Debay, Yves

(57) **Abrégé**

La présente invention concerne un robinet (1) pour bouteille de gaz sous pression comportant une extrémité (4) destinée à être fixée sur l'orifice de la bouteille de gaz, un volant (2) ou bouton de commande de l'ouverture et de fermeture de la vanne du robinet (1), une sortie (5) de gaz sous pression, et un manomètre caractérisé en ce que le manomètre (7) mesurant la pression dans la bouteille est intégré dans le volant (2) de commande.

## Description

La présente invention concerne un robinet pour bouteille de gaz sous pression dont le volant ou bouton de commande d'ouverture et de fermeture comporte un manomètre intégré. L'invention concerne plus particulièrement un robinet à détendeur intégré pour bouteille d'oxygène comprimé destiné notamment dans le cas d'oxygénothérapie en milieu médical. L'invention peut s'appliquer également, par exemple, au soudage et/ou coupage par le gaz.

Il est connu des robinets montés sur bouteilles de gaz sous pression comportant un volant de commande de l'ouverture des gaz et un manomètre, séparé du volant de commande monté sur le corps du robinet pour mesurer et indiquer la pression du gaz dans la bouteille. Cependant, ces types de robinet n'offrent pas toutes les garanties de sécurité. En effet, en cas de chute de l'ensemble, le manomètre peut se casser et libérer le gaz contenu dans la bouteille ce qui peut s'avérer dangereux et coûteux. Il est connu également des robinets détendeurs comportant une manette de commande de l'ouverture de la vanne des gaz et un dispositif réalisant la détente du gaz provenant de la bouteille ainsi que le réglage de son débit. De tels robinets détendeurs sont notamment utilisés dans des applications médicales en oxygénothérapie. Traditionnellement, ces robinets détendeurs sont pourvus également d'un manomètre séparé du bouton de commande du robinet disposé selon un axe perpendiculaire à l'axe du robinet. En plus des problèmes de sécurités soulevés ci-dessus, ces robinets détendeurs à manomètres séparés sont plus encombrants et exigent par ailleurs un usinage plus complexe. Pour pallier ces risques en cas de chute de la bouteille, ces robinets détendeurs, dans les applications médicales, sont traditionnellement protégés par un capot ou tulipe de protection de forme adaptée. Ces tulipes de protections prévoient une ouverture pour la manette ou volant de commande de la vanne des gaz. Cette ouverture dans les tulipes de protection ne permet pas à l'opérateur de consulter directement le manomètre des robinets tels que ceux mentionnés ci-dessus.

Un autre problème rencontré dans les dispositifs de l'art antérieur concerne la lecture de la pression dans la bouteille lorsque le bouton de commande de la vanne des gaz est en position fermée. Dans ce cas, le manomètre qui est monté en général en aval du bouton de commande, par exemple à l'entrée du détendeur, cesse d'indiquer la pression dans la bouteille quand le bouton de commande du robinet est en position fermée. Un manomètre qui serait monté en amont du volant de commande pour mesurer la pression dans la bouteille en permanence augmenterait sensiblement l'encombrement du robinet et n'assurerait pas toutes les garanties de sécurité requises.

Un premier but de l'invention est de proposer un robinet pour bouteille de gaz comprimé, simple de réalisation, sûr, peut encombrant, pouvant être utilisé en oxygénothérapie ou soudage/coupage par le gaz et palliant tout ou partie des inconvénients de l'art antérieur relevés ci-dessus.

Ce but est atteint par le fait que le robinet pour bouteille de gaz sous pression comporte une extrémité destinée à être fixée sur l'orifice de la bouteille de gaz, un volant ou bouton de commande de l'ouverture et de fermeture de la vanne du robinet, une sortie de gaz sous pression, et un manomètre, le manomètre mesurant la pression dans la bouteille étant intégré dans le volant de commande.

Selon une autre particularité le robinet comporte un dispositif de détente des gaz comprenant ou non un dispositif de réglage du débit de gaz détendu avant une sortie du gaz détendu.

Selon une autre particularité le manomètre mesure et indique la pression du gaz dans la bouteille lorsque le volant est en position d'ouverture de la vanne des gaz.

Selon une autre particularité le manomètre est monté sur un axe, ou axe vanne, comportant des moyens d'amenée du gaz aux moyens de mesure du manomètre, l'axe vanne étant monté par des moyens étanches dans le corps du robinet, l'actionnement du volant commandant, par l'intermédiaire de l'axe vanne, des moyens mobiles d'ouverture et de fermeture de l'arrivée du gaz de la bouteille, les moyens mobiles d'ouverture et de fermeture comportant des moyens permettant, en position d'ouverture, la mise en relation du gaz provenant de la bouteille avec les moyens de l'axe vanne permettant l'amenée du gaz aux moyens de mesure du manomètre.

Un autre but de l'invention est de proposer un robinet détendeur peu encombrant simple de réalisation, sûr, pouvant être logé dans une tulipe de protection et permettant à l'opérateur de vérifier la pression du gaz dans la bouteille même lorsque le bouton de commande de la vanne des gaz est fermé.

Ce but est atteint par le fait que le manomètre mesure et indique la pression du gaz dans la bouteille en permanence, que le volant soit en position d'ouverture ou de fermeture de la vanne des gaz.

Selon une autre particularité le manomètre est monté sur un axe ou axe vanne comportant des moyens d'amenée du gaz aux moyens de mesure du manomètre, l'axe vanne étant monté par des moyens étanches dans le corps du robinet, l'actionnement du volant commandant, par l'intermédiaire de l'axe vanne, des moyens d'ouverture et de fermeture de l'arrivée du gaz de la bouteille, les moyens mobiles d'ouverture et de fermeture comportant un conduit permettant la mise en relation, en permanence, du gaz provenant de la bouteille avec les moyens de l'axe vanne réalisant l'amenée du gaz aux moyens de mesure du manomètre.

Selon une autre particularité le conduit des moyens mobiles d'ouverture et de fermeture permettant la mise en relation, en permanence, du gaz provenant de la bouteille avec les moyens de l'axe vanne réalisant l'amenée du gaz aux moyens de mesure du manomètre a un faible diamètre pour éviter des fuites importantes de gaz en cas de rupture du manomètre.

Selon une autre particularité les moyens de l'axe vanne permettant d'amener le gaz provenant de la bouteille aux moyens de mesure du manomètre sont constitués d'un conduit formé dans le corps de l'axe vanne et relié par une de ses extrémités aux moyens de mesure du manomètre.

Selon une autre particularité les moyens mobiles d'ouverture et de fermeture de l'arrivée de gaz de la bouteille sont constitués d'un clapet ayant un mouvement de translation linéaire dans le corps du robinet.

Selon une autre particularité les moyens mobiles d'ouverture et de fermeture de l'arrivée de gaz de la bouteille sont constitués d'un clapet sensiblement cylindrique vissé dans le corps du robinet et solidaire en rotation de l'axe vanne, l'axe vanne étant solidaire en rotation et en translation du volant de commande par des moyens de fixation, la rotation du volant commandant le mouvement hélicoïdal du clapet dans le corps du robinet dans le sens respectivement d'une ouverture ou d'une fermeture de l'arrivée des gaz, le clapet coulissant sur l'axe vanne dans son mouvement hélicoïdal, des moyens d'étanchéité assurant l'étanchéité de l'ensemble volant de commande par rapport au corps du robinet.

Selon une autre particularité l'axe vanne est monté dans le corps du robinet, libre en rotation par rapport à ce demier, l'axe vanne comportant des moyens assurant son blocage en translation par rapport au corps du robinet ainsi que des moyens limitant le couple des forces de frottement qui s'opposent à la rotation du volant par l'opérateur.

Selon une autre particularité l'axe vanne est monté libre en rotation dans un écrou vissé de façon étanche dans le corps du robinet, l'axe vanne étant bloqué en translation par rapport à l'écrou dans le sens de sa sortie hors du corps du robinet au moyen de deux demi-bagues montées au moyen d'un anneau de serrage sur un premier épaulement radial de l'axe vanne, les deux demi-bagues butant contre une bague antifriction montée sur l'axe vanne, la bague antifriction étant en butée contre un épaulement formé par son logement dans l'écrou, le blocage en translation de l'axe vanne dans le sens de sa pénétration dans le corps du robinet étant assuré par un second épaulement radial formé sur l'axe vanne et coopérant avec la forme complémentaire de son logement dans l'écrou en formant une butée.

Selon une autre particularité le manomètre est fixé dans le corps de l'axe vanne, l'axe vanne comportant des moyens de liaison en rotation du clapet mobile en translation et permettant de choisir le positionnement de ce demier dans le corps du robinet de façon à permettre le choix de la position relative de la graduation du manomètre par rapport à une graduation ou repère formé sur une tulipe de protection montée autour du robinet lorsque le volant de commande est en position ouverte et/ou fermée.

Selon une autre particularité l'axe vanne est constitué d'une tige allongée sensiblement cylindrique et pourvue sur une de ses extrémités d'une tête formant un disque dont l'axe de symétrie est confondu avec l'axe de symétrie de la tige, la tête de l'axe vanne étant destinée à être fixée dans un volant de commande, le manomètre étant vissé de façon étanche par son pied dans un logement complémentaire de la tête de l'axe vanne, l'extrémité libre de l'axe vanne comportant une portion de cannelures destinée à être introduite dans un logement complémentaire du clapet permettant l'entraînement en rotation de ce demier et constituant les moyens permettant de choisir le positionnement de l'axe vanne dans le corps du robinet de façon à permettre le choix de la position relative de la graduation du manomètre par rapport à une graduation ou repère formée sur une tulipe de protection monté autour du robinet lorsque le volant de commande est en position ouverte et/ou fermée.

Selon une autre particularité l'axe vanne est pourvu de moyens de fixation du volant sur ce demier et permettant le positionnement de l'axe vanne dans le volant de façon à pouvoir choisir la position angulaire relative d'une graduation ou repère formé sur le volant par rapport à la graduation du manomètre.

Selon une autre particularité les moyens de fixation de l'axe vanne dans le volant permettant le positionnement de l'axe vanne dans le volant de façon à pouvoir choisir la position angulaire relative d'une graduation ou repère formé sur le volant par rapport à la graduation du manomètre sont constitués de godrons en creux répartis radialement sur la surface périphérique de la tête formant disque de l'axe vanne et coopérant avec des godrons en saillie formés dans le volant de commande sur lequel l'axe vanne vient se fixer, le volant étant pourvu également de moyens permettant d'encliqueter l'axe vanne dans le volant une fois choisie l'orientation de ce demier.

Selon une autre particularité les moyens d'encliquetage du volant permettant la fixation du volant dans l'axe vanne sont constitués de languettes formées dans le volant qui s'encliquettent dans des gorges formées dans les bords des godrons en creux de la tête de l'axe vanne.

Selon une autre particularité le robinet comporte des moyens empêchant la projection du volant à manomètre intégré sous l'action du gaz sous pression en cas de rupture de l'axe vanne.

Selon une autre particularité les moyens empêchant la projection du volant sont constitués d'une goupille assurant le blocage de la translation de l'axe vanne dans l'écrou, la goupille étant disposée dans un logement transversal de l'écrou et dans une rainure radiale formée sur la périphérie de l'axe vanne.

D'autres particularités et avantages de la présente invention apparaîtront plus clairement à la lecture de la description ci-après faite en référence aux dessins annexés dans lesquels :
- la figure 1A représente une vue de côté et en section partielle d'un robinet détendeur selon l'invention dans un premier mode de réalisation,
- la figure 1B représente une vue de côté et en section partielle d'un robinet détendeur selon l'invention, selon un plan de section perpendiculaire à celui de la figure 1A,
- la figure 1C représente une vue agrandie et en coupe de la partie volant à manomètre intégré du robinet détendeur de la figure 1A,
- la figure 2A représente une vue en coupe partielle et selon un plan de symétrie d'un axe vanne, support de manomètre, du premier mode de réalisation de l'invention,
- la figure 2B représente une vue de côté de l'extrémité cannelée, de l'axe vanne selon le premier mode de réalisation de l'invention,
- la figure 3 représente une vue en coupe longitudinale d'un clapet de fermeture de l'arrivée des gaz du premier mode de réalisation de l'invention,
- la figure 4 représente une section agrandie de la partie volant à manomètre intégré du robinet détendeur, selon un second mode de réalisation, dans lequel le manomètre indique la pression du gaz dans la bouteille même quand le volant de commande est en position fermée,
- la figure 5 représente une vue en coupe longitudinale partielle et selon un plan de symétrie d'un axe vanne support de manomètre du second mode de réalisation de l'invention,
- la figure 6 représente une vue en coupe longitudinale d'un clapet de fermeture de l'arrivée des gaz selon le second mode de réalisation de l'invention,
- la figure 7 représente une vue de face d'un volant de commande de la vanne des gaz selon l'invention.

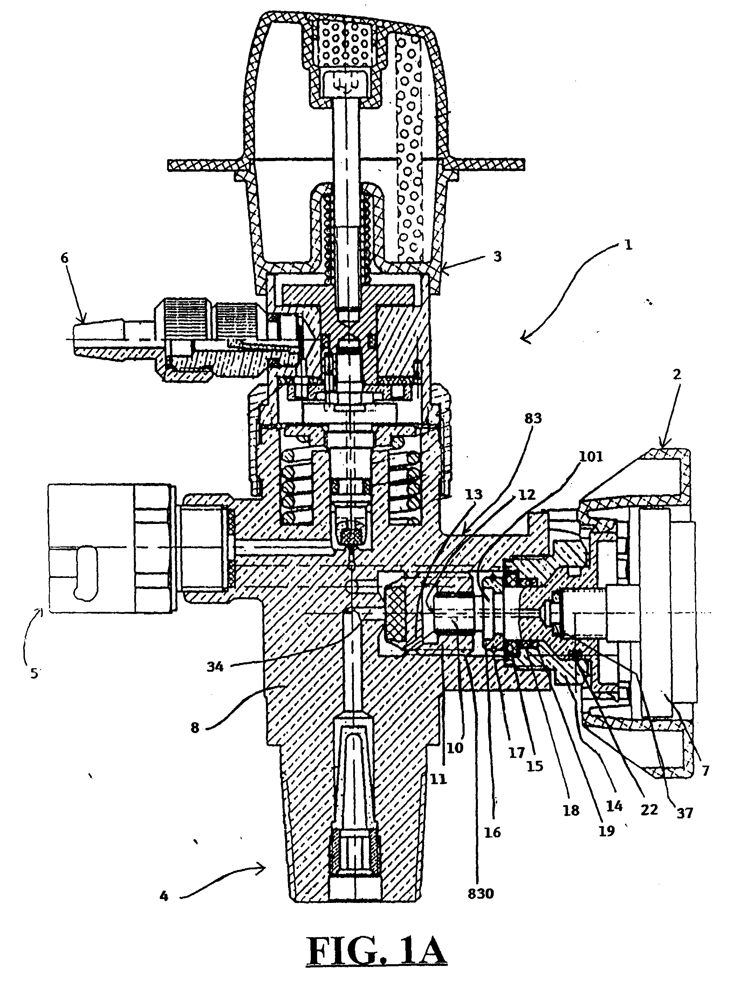

Les figures 1A et 1B représentent des sections d'un robinet (1) détendeur selon l'invention dans un premier mode de réalisation et selon des plans de section perpendiculaires. Le robinet (1) est constitué d'un corps (8) dont la partie inférieure (4) est conique ou sensiblement cylindrique et filetée pour être montée de façon connue sur l'orifice de la bouteille de gaz. Le robinet (1) comporte un volant (2) d'ouverture de la vanne des gaz à manomètre intégré qui sera décrit ci-après. Le robinet détendeur (1) comporte également, dans sa partie supérieure, un dispositif (3) connu de détente du gaz provenant de la bouteille. Le gaz détendu est délivré avec un débit réglable par une sortie (6) située dans la partie supérieure du robinet (1). A cet effet et de façon connue, le détendeur comporte un dispositif de réglage du débit de gaz détendu. A titre d'exemple non limitatif, le détendeur (3) ramène le gaz qui est par exemple à une pression de 200 bar dans la bouteille, à une pression de l'ordre de 3,5 bar. Un orifice de remplissage (9) est également prévu sur le corps (8) du robinet (1) pour permettre le remplissage de la bouteille de gaz. Enfin, le corps du robinet comporte une sortie (5) ou prise à baïonnette permettant, selon les besoins d'utilisation, de délivrer du gaz détendu avec un débit non réglable, en court-circuitant le dispositif de réglage du débit du détendeur (3).

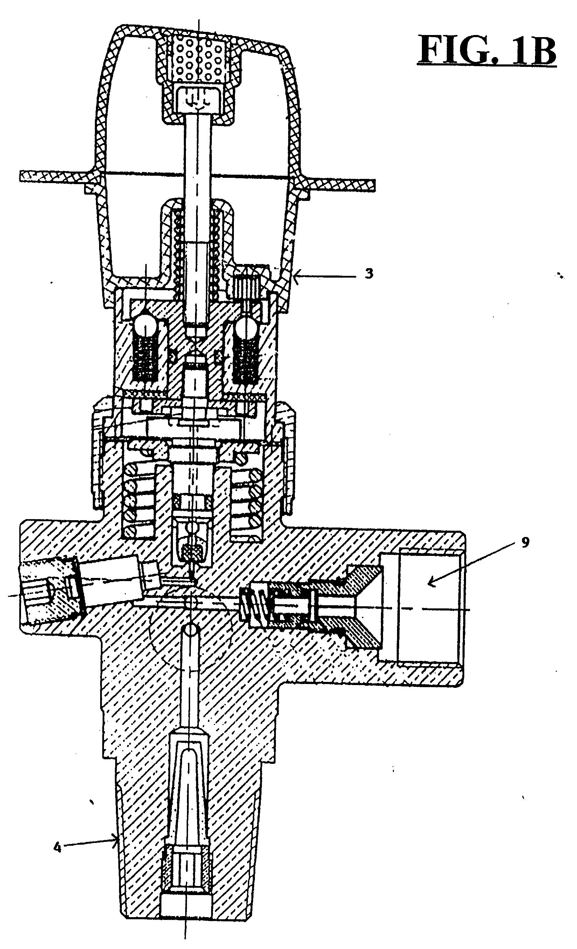

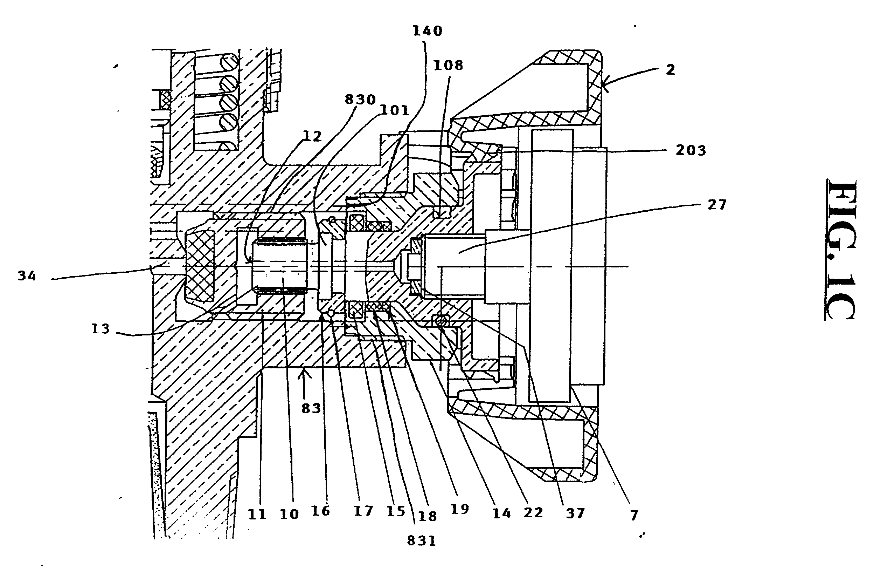

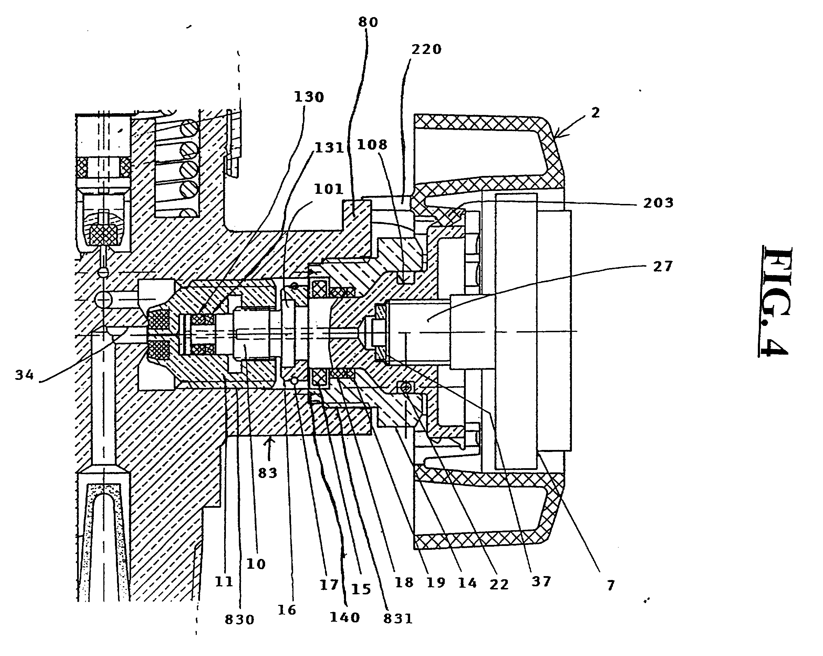

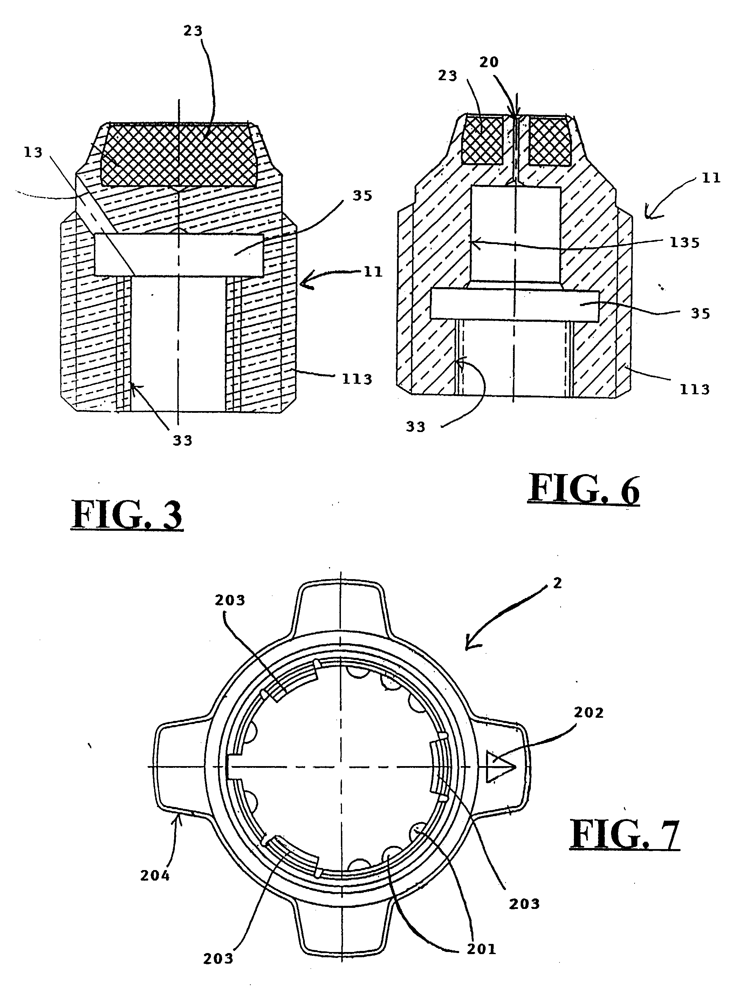

Le bouton ou volant (2) de commande de l'ouverture et de la fermeture du robinet (1) de la figure 1A va à présent être décrit en référence aux figures 1A, 1C, 2A, 2B, et 3. La figure 1C représente une vue agrandie de la partie volant (2) de commande à manomètre (7) intégré dans le robinet (1) de la figure 1A. L'actionnement d'un volant (2) commande, par l'intermédiaire d'un axe ou axe vanne (10), la translation d'un clapet (11) mobile qui réalise l'ouverture et la fermeture de l'arrivée (34) du gaz provenant de la bouteille. L'axe vanne (10, figures 2A, 2B) constitue d'une part le support du manomètre (7), et d'autre part contribue à entraîner le clapet (11) en mouvement suite à l'actionnement du volant (2). L'axe vanne (10) est constitué d'une tige ou corps allongé sensiblement cylindrique et pourvu sur une de ses extrémités, ou extrémité arrière, d'une tête (102). La tête (102) de l'axe vanne (10) a sensiblement la forme d'un disque pourvu d'un épaulement formant un anneau vers l'arrière de l'axe vanne (10). L'axe de symétrie de la tête (102) de l'axe vanne (10) est confondu avec l'axe de symétrie de l'axe vanne (10). Par soucis de simplification la tête (102) de l'axe vanne (10) est appelée dans la suite "tête (102) discoïdale". L'autre extrémité du corps de l'axe vanne (10) est constituée d'une portion (103) cannelée destinée à être logée dans un trou borgne du clapet (11), pourvu sur sa surface inteme de cannelures complémentaires. Le long de son corps allongé l'axe vanne (10) comporte, après la portion (103) cannelée, un premier épaulement radial (101). Ce premier épaulement radial (101) est prévu pour le montage, sur l'axe vanne (10), de moyens (16, 17) de blocage en translation de ce dernier sur un écrou monté dans le corps (8) du robinet (1). Le corps de l'axe vanne (10) comporte ensuite une portion cylindrique (107) destinée notamment au montage, sur l'axe vanne (10), d'un joint d'étanchéité (18) comme décrit ci-après. A la fin de la portion cylindrique (107) prévue pour un joint (18), le diamètre du corps de l'axe vanne (10) croît dans la direction de la tête (102) de façon à former sensiblement une portion en tronc de cône. La portion en tronc de cône s'élargissant vers la tête (102) forme un second épaulement (104) qui vient en butée sur l'écrou (14) et en opposition par rapport aux moyens (16, 17) de blocage montés sur l'épaulement radial (101). Les moyens (16, 17) de blocage montés sur l'épaulement radial (101) sont constitués notamment de deux demi-bagues décrites ci-après. Entre le second épaulement (104) et la tête (102) discoïdale, le corps de l'axe vanne (10) comporte une rainure radiale (108) destinée à accueillir une goupille de blocage (22, figure 1C) lorsque l'axe vanne (10) est monté dans le corps (8) robinet (1). La face discoïdale (102) de l'axe vanne (10) comporte un logement (109) ayant la forme d'un T en section longitudinale. Ce logement (109) est destiné à accueillir un manomètre (7) de type connu. Le logement (109) du manomètre est symétrique par rapport à l'axe de symétrie de l'axe vanne (10). Ce logement (109) du manomètre est formé par une première portion discoïdale de diamètre sensiblement égal au diamètre de la tête (102) de l'axe vanne (10). La portion discoïdale du logement (109) destiné au manomètre se prolonge par un filetage (106) formé dans un trou borgne formé dans le corps cylindrique de l'axe vanne (10). Ce filetage (106) est destiné à accueillir le pied de fixation (27) fileté du manomètre (7). Ainsi, un manomètre (7) à pied arrière de type connu est logé dans l'axe vanne (10) par vissage du pied de ce dernier dans le filetage (106) du logement (109) de l'axe vanne (10). A cet effet, le manomètre (7) utilisé est un manomètre dont l'axe de symétrie du pied est confondu avec l'axe de symétrie du manomètre. De manière connue, un joint d'étanchéité (37) annulaire est disposé sur l'extrémité du pied (27) du manomètre (7) pour assurer l'étanchéité de la fixation de ce demier dans l'axe vanne (10). L'axe vanne (10) est pourvu par ailleurs d'un conduit (12) centré sur l'axe de symétrie de l'axe vanne (10). Le conduit (12) de l'axe vanne débouche, par une de ses extrémités, dans le fond du logement (109, 106) destiné au pied du manomètre et par son autre extrémité, sur la face avant (111) de l'extrémité cannelée (103) de l'axe vanne (10). Ce conduit (12) de l'axe vanne est destiné à permettre le passage du gaz provenant de la bouteille vers les moyens de mesure du manomètre (7). La tête (102) discoïdale de l'axe vanne (10) est pourvue, sur sa surface périphérique, d'une denture radiale formée par des creux en arcs de cercles (105), ou godrons en creux (105). Ces godrons en creux (105) de l'axe vanne (10) sont destinés à coopérer avec des lobes hemi-cylindriques (201) complémentaires, ou godrons en saillie (201), formés sur la surface intérieure d'un volant (2, figure 7) de commande ayant la forme d'un anneau et monté sur l'axe vanne (10). Les axes des demi-cylindres constituant les godrons en saillie (201) sont parallèles à l'axe de symétrie du volant (2). Ces formes complémentaires à godrons en creux (105) et en saillie (201) permettent le positionnement et le blocage en rotation du volant (2) sur l'axe vanne (10). En effet, le positionnement de l'axe vanne dans le volant (2) au moyen du système à godrons (105, 201) permet de choisir la position angulaire relative d'une graduation ou repère (202) formé sur le volant (2) par rapport à la graduation du manomètre (7). Ce système à godrons (105, 201) contribue également avec les cannelures (103) de l'axe vanne et comme décrit ci-dessous, à permettre de choisir la position relative des graduations du volant (2) et du manomètre (7) par rapport à un repère marqué sur la tulipe de protection. Dans l'exemple de réalisation préféré non limitatif décrit ici, la tête (102) de l'axe vanne (10) comporte 18 godrons en creux (105) qui coopèrent avec 8 godrons en saillie (201) complémentaires du volant (2). De cette façon, la position angulaire relative de la graduation du manomètre (7) par rapport au repère (202) formé sur le volant (2) peut être choisie à 20 degrés près. Par ailleurs, chacun des bords des godrons en creux (105) de la tête de l'axe vanne (10) forme une gorge (110) destinée à coopérer avec un moyen d'encliquetage (203) du volant (2). Les deux bords de chacune des gorges (110) formées par les godrons en creux (105) de l'axe vanne (10) sont alignés sur des droites parallèles à l'axe de symétrie de l'axe vanne (10). Le volant (2) ou bouton d'ouverture du robinet (1) est constitué d'une pièce ayant sensiblement la forme d'un anneau et pourvu sur sa surface extérieure de quatre bossages (204) radiaux de préhension disposés régulièrement à 90 degrés. Les bossages (204) de préhension facilitent l'actionnement manuel en rotation du volant (2) par un opérateur. Un des bossages (204) de préhension comporte un repère (202) de lecture constitué d'une flèche et destiné à être alignée, lorsque la vanne est ouverte, avec un repère d'ouverture marqué sur la tulipe de protection (non représentée) disposée sur la bouteille. La tulipe de protection est montée de façon connue autour du robinet (1) détendeur. La face pourvue de la flèche repère (202) constitue l'avant du volant (2), c'est à dire la partie consultée par l'opérateur. Les godrons en saillie (201) du volant (2) sont formés sur la surface circulaire inteme du volant (2), destinée à accueillir la tête (102) de l'axe vanne (10). Bien évidemment, la surface interne du volant (2) a une forme et un diamètre correspondants à la forme et au diamètre de la tête (102) discoïdale de l'axe vanne (10). La surface circulaire intérieure du volant (2) comporte en outre trois languettes (203) situées à 120 degrés par rapport à l'axe de symétrie du volant (2) et destinée à permettre l'encliquetage du volant (2) dans les gorges (110) de la tête (102) de l'axe vanne (10). Ces languettes (203) d'encliquetage qui font corps avec le volant (2) prennent naissance à l'arrière du volant (2) et sont sensiblement parallèles à l'axe de symétrie du volant (2). La partie des languettes (203) située en vis à vis de l'axe de symétrie du volant (2) est pourvue d'un renflement de forme complémentaire à la forme des gorges (110) formées sur la tête discoïdale (102) de l'axe vanne (10). Lors du montage, le volant (2) est enfilé par l'opérateur sur le corps allongé de l'axe vanne (10), sa face avant toumée vers le manomètre (7). Ensuite, l'opérateur positionne angulairement l'axe vanne (10) dans le volant (2) puis encliquette ces deux pièces. L'encliquetage de l'axe vanne (10) dans le volant (2) est réalisé par la pénétration de la partie renflée des languettes (203) dans les gorges (110). Le logement de l'ensemble (2, 10, 7) axe vanne, manomètre et volant de commande dans le corps (8) du robinet (1) est réalisé dans un alésage fileté formé dans le corps (8) du robinet (1). Cet alésage est fileté sur une première portion (830) située à proximité de l'orifice (34) d'arrivée de gaz de la bouteille et une seconde portion filetée (831) située à proximité de l'extrémité du bossage (83) qui prolonge le corps (8) du robinet (1). Cette première portion filetée (830) est prévue pour un clapet (11, figure 3) cylindrique mobile qui réalise l'ouverture et la fermeture de l'orifice d'arrivée de gaz. A cet effet le clapet (11) comporte sur sa surface exteme un filetage (113) destiné à être vissé dans ce premier filetage (830). L'axe vanne (10) est ensuite monté, par son extrémité cannelée, dans un écrou (14) de positionnement. Le logement central non fileté de l'écrou (14) qui accueille l'axe vanne (10) est de forme complémentaire aux portions cylindriques (107) et au tronc de cône du corps de l'axe vanne (10). Ces formes complémentaires de l'écrou (14) et de l'axe vanne (10) permettent la rotation de l'axe vanne (10) dans l'écrou (14) et bloquent la translation de l'axe vanne (10) dans le sens de son enfoncement dans l'écrou (14). La partie cylindrique du logement de l'écrou (14) a un diamètre plus grand que le diamètre extérieur de cette portion cylindrique (107) de l'axe vanne (10). Ainsi il existe un jeu formé par un premier espace annulaire entre l'axe vanne (10) et l'écrou (14). Cet espace annulaire entre l'axe vanne (10) et l'écrou (14) permet d'insérer dans celui-ci une bague anti-extrusion (19) et un joint d'étanchéité (18) montés sur l'axe vanne (10). La bague anti-extrusion (19) empêche que, sous l'effet de la pression du gaz, le joint d'étanchéité (18) ne se faufile entre l'axe vanne (10) et l'écrou (14), notamment au niveau de la naissance de la portion tronconique de l'axe vanne (10). En effet, sans la bague anti-extrusion (19), le joint d'étanchéité (18) pourrait être détérioré en se coinçant entre l'axe vanne (10) et l'écrou (14). L'extrémité de l'écrou (14), qui coïncide avec l'extrémité de la portion (107) cylindrique de l'axe vanne (10), comporte un alésage concentrique à l'alésage formant le logement des joint (18) et bague anti-extrusion (19). Cet alésage de l'extrémité de l'écrou (14), qui a un diamètre plus grand que le diamètre de l'alésage destiné au joint (18) et à la bague anti-extrusion (19), forme un épaulement radial dans l'écrou (14) en direction de la tête de l'axe vanne (10). Cet alésage de l'extrémité de l'écrou (14) forme un second espace annulaire entre l'axe vanne (10) et l'écrou (14). Ce second espace annulaire est destiné à accueillir une bague antifriction (15) montée sur l'axe vanne (10). La bague antifriction (15) est pourvue de rainures radiales sur sa surface périphérique ainsi que sur ses surfaces inférieures et extérieures. Par exemple, la bague antifriction (15) comporte quatre rainures, réparties tous les 90 degrés par rapport à l'axe de symétrie de la bague (15). Cette bague antifriction (15) est prévue pour permettre une rotation aisée du volant (2) par l'opérateur en limitant les frottements au niveau des moyens (16, 17) de blocage en translation de l'axe vanne dans l'écrou (14). Les moyens (16, 17) de blocage en translation de l'axe vanne dans l'écrou (14) sont constitués de deux demi-bagues (16), ou demi-coquilles (16), assemblées au moyen d'un anneau (17) élastique sur l'épaulement (101) radial de l'axe vanne (10). L'épaulement (101) radial de l'axe vanne (10) bloque toute translation des demi-bagues (16) par rapport à ce dernier. Les deux demi-bagues (16), qui sont en appui contre la bague antifriction (15), maintenues assemblées par l'anneau élastique (17), forment une butée empêchant la sortie de l'axe vanne (10) hors de l'écrou (14). La section du robinet (1) représentée de la figure 1C est réalisée selon un plan de symétrie de l'ensemble et passant par les rainures radiales de la bague antifriction (15). Ainsi, cette figure 1C semble représenter un jeu, qui n'existe pas, entre les demi-bagues (16) et la bague antifriction (15). L'ensemble axe vanne (10) sur lequel sont montés tous les accessoires du volant (2) est ensuite monté dans le corps (8) du robinet (1) par vissage de l'écrou de positionnement (14) dans le second filetage (831) du corps du robinet (1). Le second filetage (831) destiné au montage de l'écrou (14) dans le robinet (1) est concentrique au premier filetage (830) destiné au guidage du clapet (11) et de diamètre supérieur à ce dernier. De cette manière, l'extrémité du filetage destiné à l'écrou (14) forme un épaulement vers l'intérieur du corps (8) du robinet (1). Cet épaulement est pourvu d'une petite pointe usinée (140) dans le corps (8) du robinet et destinée à être écrasée par l'écrou (14) pour assurer l'étanchéité entre le corps (8) du robinet (1) et l'écrou (14) vissé dans ce demier. Dans une forme de réalisation préférée non limitative le corps (8) du robinet et l'écrou (14) sont constitués de laiton nickelé. Lorsque l'écrou (14) est vissé dans le corps (8) du robinet (1), l'extrémité cannelée (103) de l'axe vanne (10) s'engage dans un logement complémentaire (33, figure 3) formé dans la partie arrière du clapet (11), la partie avant de ce demier étant en vis-à-vis de l'orifice (34) d'arrivée du gaz sous pression. Le logement (33) du clapet (11) destiné à accueillir l'extrémité cannelée (103) de l'axe vanne (10) se prolonge dans le corps du clapet par une cavité cylindrique (35). La cavité cylindrique (35) du clapet (11) est concentrique au logement (33) destiné à l'extrémité cannelée (103) et de diamètre supérieur à cette dernière. Cette structure à cannelures de l'extrémité (103) de l'axe vanne (10) et de la forme (33) complémentaire du logement du clapet (11) permet l'entraînement en rotation de ce dernier par l'axe vanne (10) dont la rotation est commandée par le volant (2) actionné par l'opérateur. Cette structure à cannelures permet également le choix du positionnement angulaire de l'axe vanne (10) dans le clapet (11) et donc dans le corps (8) du robinet (1). De cette façon, en montant l'axe vanne (10) dans le robinet (1), il est possible de choisir l'orientation angulaire des graduations et/ou repères du manomètre (7) et du volant (2) par rapport à une graduation ou repère formée sur une tulipe de protection monté autour du robinet (1). Bien sur, ce positionnement relatif des repères et graduations vaut pour les positions extrêmes d'ouverture et de fermeture du volant (2) puisque que ce dernier est tourné lors de son utilisation. En effet, selon les exigences d'utilisation du robinet, ces divers repères et graduations doivent avoir une position relative déterminée lorsque le volant est en position fermée et/ou ouverte. Le positionnement angulaire de l'axe vanne (10) dans le robinet (1) est réalisé à l'angle près séparant deux cannelures adjacentes. Bien sûr, l'entraînement du clapet par un système à cannelures peut être remplacé par tout autre moyen connu, par exemple par un carré d'entraînement de type connu. Ainsi, suivant le sens de rotation du volant (2) de commande, l'axe vanne (10) entraîne le clapet (11) selon un mouvement hélicoïdal dans le filetage du corps (8) du robinet (1). Au cours de sa translation, le clapet (11) coulisse sur l'extrémité cannelée (103) de l'axe vanne (10) qui l'entraîne en rotation. Le mouvement de translation du clapet (11) par rapport à l'orifice d'arrivée du gaz réalise l'ouverture et la fermeture du robinet (1). Le clapet (11) est pourvu d'un conduit (13) latéral débouchant dans sa cavité cylindrique (35), permettant au gaz sous pression d'accéder au conduit (12) de l'axe vanne (10) quand l'orifice (34) d'arrivée du gaz n'est pas obturé. De cette façon, lorsque le clapet (11) ouvre l'orifice (34) d'arrivée des gaz sous la commande du volant (2) actionné par l'opérateur, les moyens de mesure du manomètre (7) sont mis en relation avec le gaz sous pression provenant de la bouteille. Le gaz sous pression transite par le conduit (13) dans la cavité (35) du clapet (11) puis dans le conduit axial (12) de l'axe vanne (10). La face avant du clapet (11) est constituée d'une gamiture (23) cylindrique en matériau thermoplastique ou en élastomère, sertie dans le clapet (11). Le clapet est par exemple constitué, tout comme l'axe vanne (10), l'écrou (14), et la plupart des pièces du robinet (1), de laiton ou de laiton nickelé. Bien entendu ces pièces peuvent être constituées d'autres matériaux connus. Cette gamiture (23) thermoplastique assure l'étanchéité de la fermeture de l'orifice (34) d'arrivée du gaz. Avantageusement, l'écrou (14) est pourvu d'un perçage transversal destiné à accueillir une goupille (22) de blocage de la translation de l'axe vanne (10) par rapport à l'écrou (14), la goupille (22) se logeant également dans la rainure radiale (108) de l'axe vanne (10). Cette goupille (22) de blocage empêche la projection du volant (2) sous la pression du gaz en cas de rupture de l'axe vanne (10) par exemple. Ainsi on a un robinet (1) détendeur dont le volant ou bouton de commande (2) comporte un manomètre (7) intégré. Lors de l'ouverture des gaz, le manomètre intégré au volant (2) indique et mesure la pression du gaz dans la bouteille. Avantageusement le volant (2) de commande est pourvu d'un doigt (220) de butée qui coopère avec au moins un épaulement (80) formé sur le corps (8) du robinet (1). Par exemple, les butées du doigt (220) du volant contre le ou les épaulements (80) du corps (8) du robinet (1) marquent les positions extrêmes du volant dans le sens de son ouverture ou/et de sa fermeture.

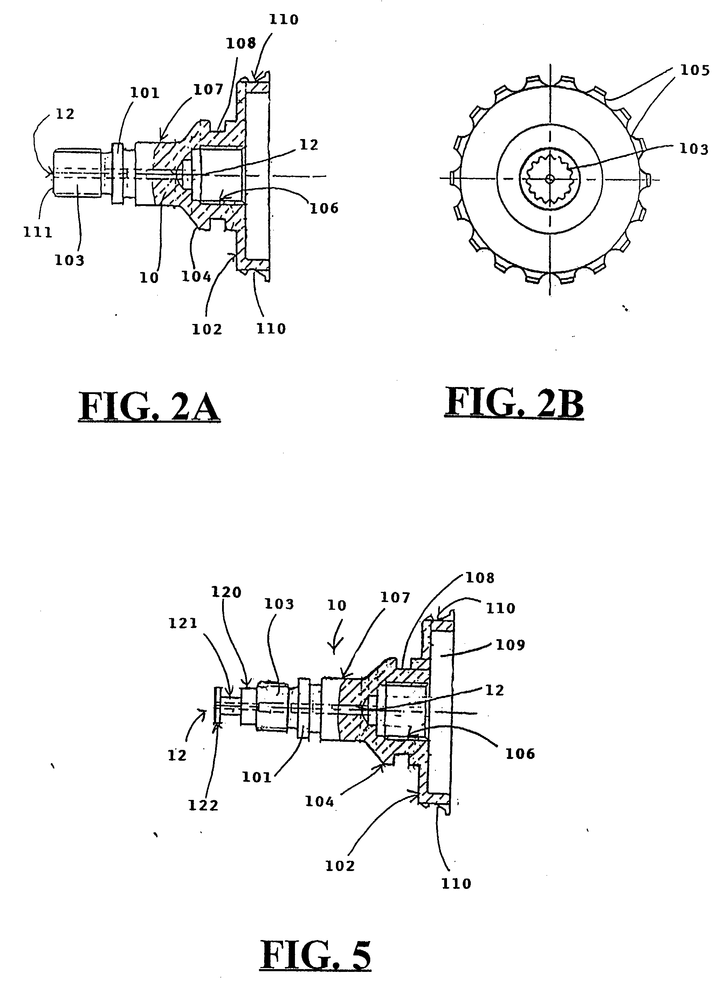

La figure 4 représente une section agrandie de la partie volant (2) à manomètre (7) intégré du robinet détendeur (1), selon un autre mode de réalisation. Dans le mode de réalisation de la figure 4, le manomètre (7) indique la pression dans la bouteille en permanence, que le volant (2) de commande soit en position ouverte ou en position fermée. Cette variante de réalisation est appelée variante à manomètre (7) actif par opposition à la forme à manomètre non actif décrit ci-dessus. Dans cette variante de réalisation seules les formes du clapet (11) et de l'extrémité cannelée de l'axe vanne (10) diffèrent par rapport à la forme de réalisation de l'invention représentée aux figures 1A et 1C. Les mêmes éléments que ceux décrits ci-dessus sont désignés par les mêmes références numériques. L'axe vanne (10, figure 5) de la variante à manomètre (7) actif a une longueur supérieure à l'axe vanne (10, figure 2A) de la variante à manomètre (7) non actif (figure 2A). Les deux formes d'axe vanne (10) sont identiques depuis la tête discoïdale (102) jusqu'à la portion cannelée (103). La longueur de la portion cannelée (103) de l'axe vanne (10) de la variante à manomètre (7) actif est inférieure à la longueur de la portion cannelée de l'axe vanne (10) de la variante à manomètre (7) non actif. Cependant, l'axe vanne de la variante à manomètre (7) actif est pourvu d'une portion supplémentaire, symétrique par rapport à l'axe de symétrie de l'axe vanne, qui prolonge le corps de ce dernier au-delà de sa partie (103) cannelée. Cette portion supplémentaire est constituée d'une première portion cylindrique (120) de diamètre légèrement inférieur à la portion cannelée (103). Une seconde portion cylindrique (121), pourvue à son extrémité d'un disque (122), prolonge le corps de l'axe vanne (10) au-delà de la première portion cylindrique (120). Le disque (122) situé à l'extrémité libre de l'axe vanne (10) a un diamètre égal à la première portion cylindrique (120). La seconde portion cylindrique (121) a quant à elle un diamètre sensiblement inférieur à la première portion cylindrique (120). Comme précédemment, l'axe vanne (10) est pourvu d'un conduit axial (12) relié aux moyens de mesure du manomètre (7). Un joint d'étanchéité (130) et une bague anti-extrusion (131) supplémentaires sont montés sur cette seconde portion cylindrique (121). Ces joint d'étanchéité (130) et bague anti-extrusion (131) supplémentaires sont ainsi situés entre la première portion cylindrique et le disque (122) de l'extrémité libre de l'axe vanne (10). La bague anti-extrusion (131) est en appui contre la première portion cylindrique (120) tandis que le joint d'étanchéité (130) est en appui contre le disque (122) de l'extrémité de l'axe vanne (10). Le disque (122) assure le maintien du joint d'étanchéité torique (130) sur l'axe vanne (10). Comme précédemment, l'extrémité libre de l'axe vanne (10) est monté dans un clapet (11) qui réalise l'ouverture et la fermeture de l'arrivée (34) du gaz. Comme précédemment, l'extrémité cannelée (103) de l'axe vanne (10) est introduite dans un logement (33) complémentaire d'un clapet (11) mobile. Le logement (33) du clapet destiné à la partie cannelée (103) de l'axe vanne se prolonge dans le corps du clapet (11) par une cavité cylindrique (35) sensiblement identique à celui du clapet de la figure 3. Enfin, le clapet (11) est pourvu d'un couloir (135) cylindrique destiné à accueillir l'extrémité de l'axe vanne (10). Le clapet (10) est pourvu d'un conduit (20) de faible diamètre centré sur sa face avant et débouchant dans le couloir (135) destiné à l'extrémité de l'axe vanne (10). Le conduit (20) de faible diamètre est centré sur l'orifice (34) d'arrivée du gaz. Ce conduit (20) de faible diamètre permet ainsi de relier en permanence le gaz sous pression de la bouteille avec les moyens de mesure du manomètre (7). En effet, même quand le volant (2) est en position fermée et donc que le clapet (11) obture l'arrivée (34) du gaz, le gaz peut passer dans le conduit (20) de faible diamètre du clapet (11) puis dans le conduit (12) de l'axe vanne (10), jusqu'au manomètre (7). Du fait que le conduit (20) a un faible diamètre, il ne se produit qu'une faible fuite de gaz vers l'extérieur dans le cas où le manomètre serait cassé. La forme du clapet (11) de la variante à manomètre (7) actif est donc adaptée en conséquence. Ainsi, la garniture thermoplastique (23) est constituée d'un anneau pour s'adapter au conduit (20) de faible diamètre. De même, le clapet (11) de la figure 6 ne comporte pas de conduit latéral (13) débouchant dans la cavité cylindrique (35) comme c'est le cas pour le clapet de la figure 3. Le déplacement du clapet (11) est réalisé de la même façon que précédemment, le clapet (11) coulissant sur la partie cannelée (103) de l'axe vanne dans son mouvement hélicoïdal. Le joint d'étanchéité (130) supplémentaire assure l'étanchéité du déplacement de l'extrémité de l'axe vanne (10) dans le couloir (135) cylindrique du clapet (11). La bague anti-extrusion (131) supplémentaire assure le maintien en position du joint (130), évitant notamment son cisaillement entre le couloir (135) du clapet (11) et la première portion cylindrique (120) de l'extrémité de l'axe vanne (10).

Les volants (2) à manomètre intégré (7) des robinets (1) détendeurs décrits ci-dessus nécessitent un encombrement réduit tout en garantissant une grande sécurité d'utilisation. Par ailleurs ces robinets (1) détendeurs à manomètre (7) intégré dans le volant de commande s'intègrent idéalement dans les tulipes de protections connues. En effet, le manomètre est consultable aisément et directement par l'opérateur.

Il est bien évident que les modes de réalisations de l'invention ne se limitent pas aux exemples décrits ci dessus. En particulier, les pièces constitutives du volant à manomètre intégré peuvent être remplacées par d'autres pièces connues de l'homme du métier et réalisant les mêmes fonctions. Par exemple, les formes des moyens de positionnement de l'axe vanne (10) dans le volant (2) ainsi que dans le clapet (11) peuvent être adaptés par l'homme du métier. Les moyens de blocage du volant (2) de commande à manomètre intégré dans le corps (8) du robinet (1) peuvent également être remplacés par des moyens connus de l'homme du métier. De même, les moyens assurant l'étanchéité de l'ensemble peuvent être remplacés par d'autres moyens connus.

Il est clair que le bouton ou volant de commande à manomètre intégré décrit ci-dessus peut être utilisé dans d'autres applications. En particulier ce volant de commande à manomètre intégré peut être monté sur d'autres dispositifs que des bouteilles de gaz sous pression. Par exemple il peut être monté sur toute installation qui nécessite une commande d'ouverture de gaz ainsi qu'une lecture de pression de ce gaz.

D'autres modifications à la portée de l'homme de métier font également partie de l'esprit de l'invention.

## Revendications

1. Robinet (1) pour bouteille de gaz sous pression comportant une extrémité (4) destinée à être fixée sur l'orifice de la bouteille de gaz, un volant (2) ou bouton de commande de l'ouverture et de fermeture de la vanne du robinet (1), une sortie (5) de gaz sous pression, et un manomètre caractérisé en ce que le manomètre (7) mesurant la pression dans la bouteille est intégré dans le volant (2) de commande.

2. Robinet (1) pour bouteille de gaz sous pression selon la revendication 1 caractérisé en ce qu'il comporte un dispositif (3) de détente des gaz comprenant ou non un dispositif de réglage du débit de gaz détendu avant une sortie (6) du gaz détendu.

3. Robinet (1) pour bouteille de gaz sous pression selon la revendication 1 ou 2 caractérisé en ce que le manomètre (7) mesure et indique la pression du gaz dans la bouteille lorsque le volant est en position d'ouverture de la vanne des gaz.

4. Robinet (1) pour bouteille de gaz sous pression selon la revendication 1 ou 2 caractérisé en ce que le manomètre (7) mesure et indique la pression du gaz dans la bouteille en permanence, que le volant (2) soit en position d'ouverture ou de fermeture de la vanne des gaz.

5. Robinet (1) pour bouteille de gaz sous pression selon la revendication 1 à 3 caractérisé en ce que le manomètre (7) est monté sur un axe (10), ou axe vanne, comportant des moyens (12) d'amenée du gaz aux moyens de mesure du manomètre (7), l'axe vanne (10) étant monté par des moyens (14 à 19) étanches dans le corps (8) du robinet (1), l'actionnement du volant (2) commandant, par l'intermédiaire de l'axe vanne (10), des moyens (11) mobiles d'ouverture et de fermeture de l'arrivée (34) du gaz de la bouteille, les moyens (11) mobiles d'ouverture et de fermeture comportant des moyens (13) permettant, en position d'ouverture, la mise en relation du gaz provenant de la bouteille avec les moyens (12) de l'axe vanne permettant l'amenée du gaz aux moyens de mesure du manomètre (7).

6. Robinet (1) pour bouteille de gaz sous pression selon la revendication 4 caractérisé en ce que le manomètre (7) est monté sur un axe (10) ou axe vanne comportant des moyens (12) d'amenée du gaz aux moyens de mesure du manomètre (7), l'axe vanne (10) étant monté par des moyens (14 à 19) étanches dans le corps (8) du robinet (1), l'actionnement du volant (2) commandant, par l'intermédiaire de l'axe vanne (10), des moyens (11) d'ouverture et de fermeture de l'arrivée du gaz de la bouteille, les moyens (11) mobiles d'ouverture et de fermeture comportant un conduit (20) permettant la mise en relation, en permanence, du gaz provenant de la bouteille avec les moyens (12) de l'axe vanne (10) réalisant l'amenée du gaz aux moyens de mesure du manomètre (7).

7. Robinet (1) pour bouteille de gaz sous pression selon la revendication 6 caractérisé en ce que le conduit (20) des moyens (11) mobiles d'ouverture et de fermeture permettant la mise en relation, en permanence, du gaz provenant de la bouteille avec les moyens (12) de l'axe vanne (10) réalisant l'amenée du gaz aux moyens de mesure du manomètre (7) a un faible diamètre pour éviter des fuites importantes de gaz en cas de rupture du manomètre.

8. Robinet (1) pour bouteille de gaz sous pression selon l'une quelconque des revendications 5 à 7 caractérisé en ce que les moyens (12) de l'axe vanne permettant d'amener le gaz provenant de la bouteille aux moyens de mesure du manomètre (7) sont constitués d'un conduit (12) formé dans le corps de l'axe vanne (10) et relié par une de ses extrémités aux moyens de mesure du manomètre (7).

9. Robinet (1) pour bouteille de gaz sous pression selon l'une des revendications 5 à 8 caractérisé en ce que les moyens (11) mobiles d'ouverture et de fermeture de l'arrivée de gaz de la bouteille sont constitués d'un clapet ayant un mouvement de translation linéaire dans le corps (8) du robinet (1).

10. Robinet (1) pour bouteille de gaz sous pression l'une des revendications 5 à 8 caractérisé en ce que les moyens (11) mobiles d'ouverture et de fermeture de l'arrivée de gaz de la bouteille sont constitués d'un clapet sensiblement cylindrique vissé dans le corps (8) du robinet (1) et solidaire en rotation de l'axe vanne (10), l'axe vanne (10) étant solidaire en rotation et en translation du volant (2) de commande par des moyens de fixation (105, 110; 201, 203), la rotation du volant (2) commandant le mouvement hélicoïdal du clapet (11) dans le corps (8) du robinet (1) dans le sens respectivement d'une ouverture ou d'une fermeture de l'arrivée des gaz, le clapet (11) coulissant sur l'axe vanne dans son mouvement hélicoïdal, des moyens d'étanchéité (18, 140) assurant l'étanchéité de l'ensemble volant (2) de commande par rapport au corps (8) du robinet (1).

11. Robinet (1) pour bouteille de gaz sous pression selon la revendication 10 caractérisé en ce que l'axe vanne (10) est monté dans le corps (8) du robinet, libre en rotation par rapport à ce demier, l'axe vanne (10) comportant des moyens (104, 14; 101, 16, 17) assurant son blocage en translation par rapport au corps (8) du robinet (1) ainsi que des moyens (15) limitant le couple des forces de frottement qui s'opposent à la rotation du volant (2) par l'opérateur.

12. Robinet (1) pour bouteille de gaz sous pression selon la revendication 11 caractérisé en ce que l'axe vanne (10) est monté libre en rotation dans un écrou (14) vissé de façon étanche dans le corps (8) du robinet (1), l'axe vanne (10) étant bloqué en translation par rapport à l'écrou (14) dans le sens de sa sortie hors du corps (8) du robinet (1) au moyen de deux demi-bagues (16) montées au moyen d'un anneau de serrage (17) sur un premier épaulement radial (101) de l'axe vanne (10), les deux demi-bagues (16) butant contre une bague antifriction (15) montée sur l'axe vanne (10), la bague antifriction (15) étant en butée contre un épaulement formé par son logement dans l'écrou (14), le blocage en translation de l'axe vanne (10) dans le sens de sa pénétration dans le corps du robinet étant assuré par un second épaulement radial (104) formé sur l'axe vanne (10) et coopérant avec la forme complémentaire de son logement dans l'écrou (14) en formant une butée.

13. Robinet (1) pour bouteille de gaz sous pression selon la revendication 12 caractérisé en ce que le manomètre (7) est fixé dans le corps de l'axe vanne (10), l'axe vanne (10) comportant des moyens (103) de liaison en rotation du clapet mobile en translation et permettant de choisir le positionnement de ce dernier dans le corps (8) du robinet (1) de façon à permettre le choix de la position relative de la graduation du manomètre (7) par rapport à une graduation ou repère formé sur une tulipe de protection montée autour du robinet (1) lorsque le volant (2) de commande est en position ouverte et/ou fermée.

14. Robinet (1) pour bouteille de gaz sous pression selon la revendication 13 caractérisé en ce que l'axe vanne (10) est constitué d'une tige allongée sensiblement cylindrique et pourvue sur une de ses extrémités d'une tête (102) formant un disque dont l'axe de symétrie est confondu avec l'axe de symétrie de la tige, la tête (102) de l'axe vanne (10) étant destinée à la fixation d'un volant (2) de commande sur ce dernier, le manomètre (7) étant vissé de façon étanche par son pied dans un logement complémentaire de la tête (102) de l'axe vanne (10), l'extrémité libre de l'axe vanne (10) comportant une portion (103) de cannelures destinée à être introduite dans un logement (33) complémentaire du clapet (11) permettant l'entraînement en rotation de ce demier et constituant les moyens (103) permettant de choisir le positionnement de l'axe vanne (10) dans le corps (8) du robinet (1) de façon à permettre le choix de la position relative de la graduation du manomètre (7) par rapport à une graduation ou repère formée sur une tulipe de protection monté autour du robinet (1) lorsque le volant (2) de commande est en position ouverte et/ou fermée.

15. Robinet (1) pour bouteille de gaz sous pression selon la revendication 14 caractérisé en ce que l'axe vanne (10) est pourvu de moyens (105, 110) de fixation de ce dernier dans le volant (2) permettant le positionnement de l'axe vanne (10) dans le volant de façon à pouvoir choisir la position angulaire relative d'une graduation ou repère formé sur le volant (2) par rapport à la graduation du manomètre (7).

16. Robinet (1) pour bouteille de gaz sous pression selon la revendication 15 caractérisé en ce que les moyens (105, 110) de fixation de l'axe vanne dans le volant (2) permettant le positionnement de l'axe vanne (10) dans le volant de façon à pouvoir choisir la position angulaire relative d'une graduation ou repère formé sur le volant (2) par rapport à la graduation du manomètre (7) sont constitués de godrons en creux (105) répartis radialement sur la surface périphérique de la tête (102) formant disque de l'axe vanne (10) et coopérant avec des godrons en saillie (201) formés dans le volant (2) de commande sur lequel l'axe vanne vient se fixer, le volant (2) étant pourvu également de moyens (203) permettant d'encliqueter l'axe vanne (10) dans le volant (2) une fois choisie l'orientation de ce dernier.

17. Robinet (1) pour bouteille de gaz sous pression selon la revendication 16 caractérisé en ce que les moyens (203) d'encliquetage du volant permettant la fixation du volant (2) dans l'axe vanne (10) sont constitués de languettes (203) formées dans le volant qui s'encliquettent dans des gorges (110) formées dans les bords des godrons en creux (105) de la tête (102) de l'axe vanne (10).

18. Robinet (1) pour bouteille de gaz sous pression l'une des revendications 11 à 17 caractérisé en ce que le robinet (1) comporte des moyens (22) empêchant la projection du volant (2) à manomètre (7) intégré sous l'action du gaz sous pression en cas de rupture de l'axe vanne (10).

19. Robinet (1) pour bouteille de gaz sous pression selon la revendication 18 caractérisé en ce que les moyens (22) empêchant la projection du volant (2) sont constitués d'une goupille assurant le blocage de la translation de l'axe vanne (10) dans l'écrou (14), la goupille (22) étant disposée dans un logement transversal de l'écrou (14) et dans une rainure (108) radiale formée sur la périphérie de l'axe vanne (10).
